# EUROPEAN PATENT SPECIFICATION

(11) **EP 3 174 266 B1**
(45) Date of publication and mention of the grant of the patent: **08.04.2020**
(21) Application number: 16200937.7
(22) Date of filing: 28.11.2016
(51) Int. Cl.: H04L 29/06, H04M 3/54

(54) **TELECOMMUNICATIONS SYSTEM VOICE CALL ROUTING**
SPRACHANRUFSROUTING IN EINEM TELEKOMMUNIKATIONSSYSTEM
ROUTAGE D'APPELS VOCAUX DE SYSTÈME DE TÉLÉCOMMUNICATIONS

(30) Priority: 27.11.2015 EP 15382591
(43) Date of publication of application: 31.05.2017
(73) Proprietor: Vodafone IP Licensing Limited, The Connection Newbury Berkshire RG14 2FN (GB)
(72) Inventor: RIESCO FERNÁNDEZ, Marco, London, Greater London W2 6BY (GB); MARTIN, Juan Antonio, London, Greater London W2 6BY (GB); DOMINGUEZ, Rafael, London, Greater London W2 6BY (GB)
(74) Representative: Boult Wade Tennant LLP

(56) References cited:
- EP-A1- 2 068 524
- US-A1- 2008 102 844
- US-A1- 2014 115 123
- US-A1- 2015 043 453
- US-B1- 8 644 822

## Description

### TECHNICAL FIELD

The invention relates to a method of controlling the routing of a voice call between a first entity and a second entity in a telecommunications system including a circuit switched network and an Internet Protocol Multimedia Subsystem, IMS, network.

### BACKGROUND TO THE INVENTION

VoLTE, Voice over LTE, is based on the IMS network, with specific profiles for control and media planes of voice service on LTE defined by GSMA in PRD IR.92. Voice service (control and media planes) is delivered as data flows within the LTE data bearer. VoLTE has up to three times more voice and data capacity than 3G UMTS and up to six times more than 2G GSM. Furthermore, it frees up bandwidth because VoLTE's packet headers are smaller than those of unoptimised VoIP/LTE.

The IMS is an architectural framework for delivering IP multimedia services. Historically, mobile phones have provided voice call services over a circuit-switched (CS) network, rather than over an IP packet-switched network. Alternative methods of delivering voice or other multimedia services over IP have become available on smartphones (e.g. VoIP or Skype), but they have not become standardised across the industry. IMS is an architectural framework to provide such standardisation.

To facilitate integration with the Internet, IMS uses IETF protocols wherever possible - e.g., SIP (Session Initiation Protocol). According to 3GPP, IMS is not intended to standardise applications, but rather to aid the access of multimedia and voice applications from wireless and wireline terminals - i.e., to create a form of fixed-mobile convergence (FMC). This is done by having a horizontal control layer that isolates the access network from the service layer.

In IMS, Application Servers (ASs) provide services to the users.

VoLTE is the approved 3GPP standard to provide voice and video over fixed and mobile broadband and includes the following characteristics:
▪ IMS based VoIP solution over 4G (LTE) radio access and packet switched (PS) domain.
▪ Multimedia Capable: Convergence of mobile, fixed and WiFi accesses is desired, due to a large increase in smartphones and many new apps for communication including multimedia.
▪ Quality: first VoIP call scheme with guaranteed quality. VoLTE is the industry accepted standard for high quality voice over LTE access.
▪ Interoperability: with other networks (interconnect & roaming) and legacy users & services.
▪ Spectral efficiency: ∼2 times more VoLTE calls per MHz than legacy calls.
▪ Keep the voice business in a fragmented market by expanding with more services.

However, the implementation of VoLTE is not straightforward due to the complexity of the existing heterogeneous service:
- Handsets carry an ad-hoc implementation. Even if the IR.92 is mandatory for VoLTE implementators, not every aspect is mandatory and there could be slight but important differences that force the network operator to complete exhaustive end to end tests with all the possible combinations.
- Legacy IMS services. The IMS specification, starting from the RFC 3261, has a lot of possible implementations, which are not always backwards compatible. For example, it's not uncommon for legacy services not to be compatible with preconditions and UPDATE methods, commonly used by VoLTE subscribers.

Known ways for achieving global compatibility include:
- Developing in each Application Server (AS) the last release of the standards used in the whole chain of ASs. This provides the compatibility, but requires the upgrade of several application servers. However, the devisers of the present invention have recognised that this is not an optimal solution as an ad-hoc development is needed in each node to be made compatible.
- Ad-hoc developing the use of a "normalising" element somewhere in the AS chaining. However, the devisers of the present invention have also recognised that this is not an optimal solution. The fact that originating and terminating legs are independent in IMS usually forces a global configuration on the relevant AS to be modified: either all the calls are routed via CS or none is. This solution is not optimal as development is needed and it uses valuable network resources that may not be essential for the call to work. Also, an "always on" configuration on the terminating scenario means that either the call is delivered via CS and not IMS, or there is a loop created on the terminating call leg. If the transfer of a call from CS to IMS is allowed (so that the call can potentially be delivered by IMS), the transferred IMS call may be routed back to CS in a known arrangement. The CS call my then, again, be transferred to IMS - thus creating an undesirable loop.

A modification of the second one is the one of interest here. Traditionally, for IMS products, there has been a constant requirement over the time: it has to be compatible with legacy CS subscribers. Forcing the call to pass though CS network will harmonise independently originating and terminating legs of the call, providing wide compatibility.

EP 2034688 A1 (HUAWEI TECH CO LTD) discloses a method to avoid recursive treatment of the recurrent messages at the CSCF level.

US 2009/0262920 A1 (HENRIKSON et al.) discloses a method to resume an iFC at a specific point in an IMS.

US 2015/0043453 A1 (HEGARTY et al.) discloses an arrangement that includes in the SIP URI an ID of the service to be executed in order to route a call to a desired location.

US 2014/0115123 (Song et al.) describes a wireless communication system for service between terminals having different communication environments. An application server send to a receiving terminal a specific message for checking radio environment capability, and the receiving terminal may send a response with its own radio environment information to the application server. The radio environment information related to receiving terminal can then be sent to the sending terminal.

US 2008/0102844 (Zhu et al.) describes a method and apparatus of domain selection for routing control. The domain is selected according to the call statuses of the user in any one or both of the CS network and IMS.

### SUMMARY OF THE INVENTION

In one aspect the present invention provides a method of controlling the routing of a voice call between a first entity and a second entity in a telecommunications system including a circuit switched network and an Internet Protocol Multimedia Subsystem, IMS, network according to claim 1. In an illustrative example, a method comprises:
directing the call to a processing node;
at the processing node, analysing routing information associated with the call; and
sending the call via the circuit switched network and/or the IMS network in dependence upon the analysis;
the processing node determining whether the call has been processed by a Media Gateway/Mobile Switching Centre Server, MSS/MGW, of the circuit switched network, before;
and if the call has been processed by the MSS/MGW before, the processing node either (i) routing the call to the IMS network or (ii) routing the call to the circuit switched network and preventing subsequent routing of the call from the circuit switched network to the IMS network.

The routing information may include call parameters of a SIP INVITE and may, for example, include header fields such as a Contact field or a Via field.

The routing information may relate to an analysis of information relating to the first entity and/or the second entity.

The processing node may select a scheme for sending the call via the circuit switched network. The scheme may be one in which a return of the call to the IMS network is inhibited or one in which a return of the call to the IMS network is permitted.

In the embodiment, for a call currently in the IMS network, a previous breakout from the IMS network to the circuit switched network is detected. A further breakout to the CS network may be prevented. Alternatively, a breakout to the CS network may be permitted, after which the call is terminated in the CS network without entering the IMS network again.

The method may control how a call is routed from the circuit switched network to the IMS network.

The first and/or second entity may have a profile associated therewith which indicates to which of a plurality of application servers of the telecommunications network the call is routed.

The processing node advantageously comprises one of the application servers.

The profile of the first and/or second entity may be modified to cause the call to be routed to the processing node.

The telecommunications system may provide Voice over LTE, VoLTE, services.

In another aspect the present invention provides a processing node for controlling the routing of a voice call between a first entity and a second entity in a telecommunications system including a circuit switched network and an Internet Protocol Multimedia Subsystem, IMS, network according to claim 9.

In an illustrative example, there is described a processing node for controlling the routing of a voice call between a first entity and a second entity in a telecommunications system including a circuit switched network and an Internet Protocol Multimedia Subsystem, IMS, network, and in which the call is directed to the processing node, the processing node including:
analysing means operable to analyse routing information associated with the call; and
routing means operable to send the call via the circuit switched network and/or the IMS network in dependence upon the analysis;
wherein the analysing means is operable to determine whether the call has been processed by a Media Gateway/Mobile Switching Centre Server, MSS/MGW, of the circuit switched network before;
and wherein the routing means is operable, if the call has been processed by the MSS/MGW before, to either (i) route the call to the IMS network or (ii) route the call to the circuit switched network and prevent subsequent routing of the call from the circuit switched network to the IMS network.

The processing node may control how a call is routed from the circuit switched network to the IMS network.

In the embodiment to be described, as part of an Internet Protocol Multimedia Sub-system (IMS), a novel application server (AS) is installed between the Call Session Control Function (CSCF) and the Media Gateway (MGW)/Mobile Switching Centre Server (MSS). The communication path within the network is based upon a set of triggers, which may be related to the capabilities of the communicating entities. The AS will determine the type of breakout from IMS to CS (if any) to be applied to a call according to parameters which determine the path the call is to follow, e.g. the via and contact headers of a session initiation protocol (SIP) request.

### BRIEF DESCRIPTION OF THE DRAWINGS

For a better understanding of the present invention an embodiment will now be described by way of example, with reference to the accompanying drawings in which:
Figure 1 shows an example IMS architecture;
Figure 2 is a signalling diagram showing the call flow for a UE when it first establishes contact with an IMS network;
Figure 3 is a signalling diagram showing a session establishment procedure;
Figure 4 is a signalling diagram, showing a procedure for performing a break out in the originating leg of a call;
Figure 5 is a signalling diagram, showing a procedure for performing a break out in the terminating leg of a call; and
Figure 6 is a flow chart showing the steps performed in the terminating leg of a call in accordance with an embodiment of the invention.

### DETAILED DESCRIPTION OF EMBODIMENT OF THE INVENTION

In the embodiment, an AS implements a breakout function (from IMS to CS) based on a set of dynamic or predefined rules, and preventing the malfunctioning of the solution if the decision point is in the terminating leg of the call, specifically handling the breakout and/or receiving the break-in (the latter when the call is routed from CS to IMS).

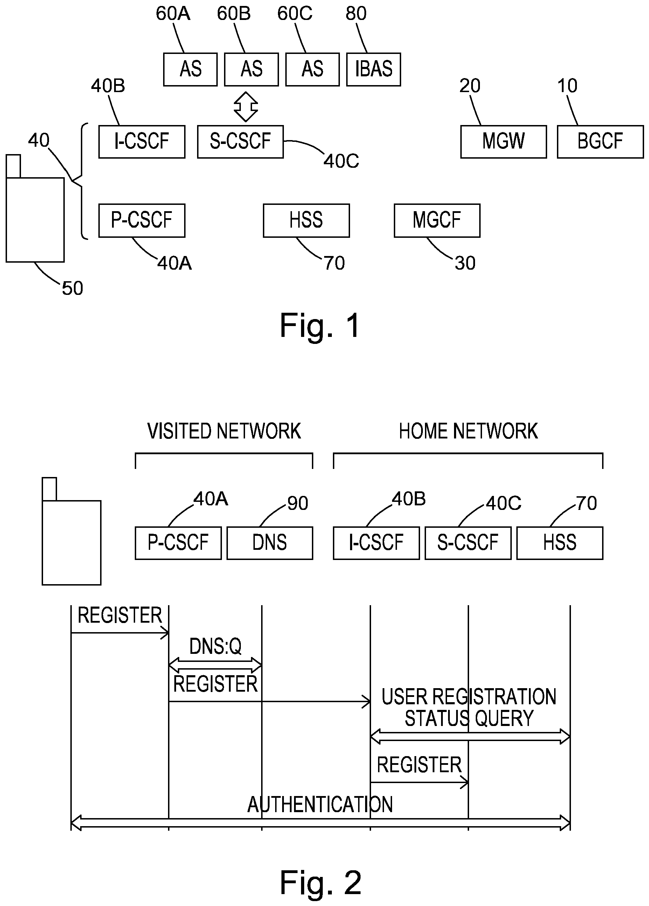

An example IMS architecture is shown in FIG. 1. IMS is independent of the type of access network; that is, it applies both to wireless and landline networks. IMS uses Session Initiation Protocol (SIP) for control and signalling messages. SIP is an IP-based signalling protocol designed for multimedia communications. The IMS architecture introduces several control functions, i.e., functional entities, to manage the network. The legacy circuit switched traffic is handled by an Inter-working Function called the BGCF (Breakout gateway control function) 10. A media gateway (MGW 20) has the ability to accept both packet and circuit switched traffic and convert one to the other. The MGW 20 is controlled by a Media Gateway Control Function (MGCF) 30.

A basic call server called the Call State Control Function (CSCF) 40 is logically partitioned into three functional entities, the Proxy, Interrogating and Serving CSCF.

The P-CSCF 40A is the first point of contact for a UE (or other device) 50 in the IMS network. The I-CSCF 40B then helps in establishing which S-CSCF 40C "owns" the UE (is in the UEs home network).

As mentioned above, in IMS Application Servers (ASs) provide services to the users. An application server (AS) is a server which is brought into or notified of a call by the network in order to provide call features or other behaviour. In IMS, an AS is a SIP entity which is invoked by the S-CSCF for each dialogue, both originating and terminating, as configured by the initial filter criteria (iFCs) of the relevant subscribers. The AS may reject or accept the call itself, redirect it, pass it back to the S-CSCF as a proxy, originate new calls, or perform more complex actions (such as forking) as a B2BUA. It may choose to remain in the signalling path, or drop out.

In the IMS core network, there is a SIP signalling interface 55 between Serving Call Session Control Function (S-CSCF) and ASs 60A, 60B, 60C that is known as the IP multimedia Service Control (ISC) Interface. One driver for the ISC interface 55 is for the S-CSCF to include a specific AS in the SIP signalling path based on initial Filter Criteria (iFC) - i.e., subscriber data. The iFC is defined on a Home Subscriber Server (HSS) 70 and passed to the S-CSCF 40C for a subscriber being served by the S-CSCF. HSS 70 provides the iFC based on subscription-related information stored therein, such as user IMS profiles and preferences and also performs authentication and authorisation of the user, and may provide information about the user's physical location. Each iFC defines conditions, known as Service Point Triggers (SPT), associated with a SIP message and the identity of the AS to contact if the conditions are met. Also, each iFC has a priority that determines the order which multiple ASs would be contacted when multiple iFC conditions are met. Each AS may pass the SIP request back to the S-CSCF 40C for continued iFC analysis or may provide a final SIP response which ends the iFC analysis.

FIG. 2 is a signalling diagram, showing the call flow for a UE 50 when it first establishes contact with an IMS network. The UE 50 sends a "register" request to the P-CSCF 40A. Assuming the P-CSCF 40A determines that the UE 50 is registering from a visiting domain, it queries a DNS 90 to find the I-CSCF in the UE's home domain. The P-CSCF 40A then sends the registration information to the I-CSCF 40B. The HSS 70 checks if the user is already registered and sends the address of the S-CSCF 40C in response. An authentication process now ensues in which the UE 50 is challenged to provide valid authentication vectors. Once the authentication procedure is completed, the S-CSCF 40C informs the HSS 70 that the UE 50 is registered.

The HSS 70 provides iFCs to the S-CSCF 40C. The iFC, in effect, maps service codes with various ASs 60A-60C. Thus, if the UE 50 later issues a service request or if the service is otherwise triggered the mapped AS will be invoked. The iFC is effectively the "call model" for the UE 50. These call models are static objects downloaded during registration from the HSS 70. Every UE in the domain of the S-CSCF 40C may, if they have the services enabled at all, have the same ASs mapped to the same services. For example, push-to-talk service for each and every UE having such service may point to the same AS or point to an AS with identical service logic to provide the identical push-to-talk functionality.

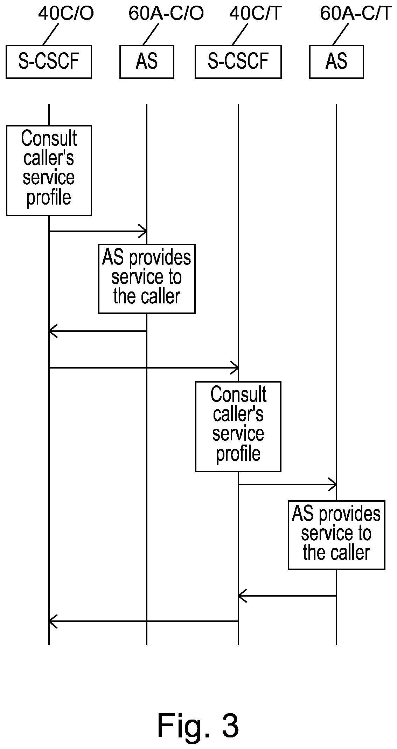

Registered UEs may use services after the initiation of a session establishment procedure depicted in FIG. 3. The figure shows a session establishment request from a caller UE that passes to an originating S-CSCF 40C/O. By virtue of the registration procedure described above, the originating S-CSCF 40C/O is aware of any of the ASs 60A-60C/O to which the call is to be transmitted in the originating leg of the call. The originating S-CSCF 40C/O consults the caller UE's service profile (iFCs). Based on the service profile the originating S-CSCF 40C/O sends an IMS service control request (ISC) to the corresponding ASs 60A-60C/O that can handle this service request. The ASs 60A-60C/O provide the service to the caller UE.

After processing by any relevant ASs 60A-60C/O in the originating leg, the call may be routed to the terminating S-CSCF 40C/T, which consults the callee UE's service profile (iFCs). By virtue of the registration procedure described above, the terminating S-CSCF 40C/T is aware of any of the ASs 60A-60C/T to which the call is to be transmitted in the termination leg of the call. Based on the service profile of the callee, the terminating S-CSCF 40C/T sends an IMS service control request (ISC) to the corresponding ASs 60A-60C/T that can handle this service request. The ASs 60A-60C/T provide the service to the callee and terminates the session and the terminating S-CSCF 40C/T terminates the application activation process.

As an illustrative example, consider the case of voice mail in which callers to a certain callee user may leave a voice message if the callee user does not respond to the call. This voice mail service is provided by an AS in the terminating leg of the call that dedicated to this service and having service logic to provide such functionality. The terminating S-CSCF 40C/T transfers control to the voice mail AS when a certain service point trigger (SPT) occurs, i.e., an event occurs that causes a trigger within the SPT to "fire." The iFCs that provide trigger points to the service logic of the terminating S-CSCF 40C/T are downloaded into the terminating S-CSCF 40C/T during callee user registration at session initiation time and may remain fixed for the duration of the session. The service profile described above that is consulted by the terminating S-CSCF 40C/T may be a static object in the sense that the information contained in it is defined once at the time of service inception.

Terminating and originating services in the IMS network have been described above. Terminating services may also be provided in the CS network. One such CS terminating service is the transfer (break-in) by the CS network of the call back to the IMS network. The call may break-in to IMS in dependence on the services required by the callee.

The embodiment to be described provides an improved arrangement that allows calls to be routed between IMS and CS networks and/or vice versa. The embodiment can be considered to force the call to pass to CS (legacy) networks through the Media Server (MSS) / Media Gateway (MGW) 20 and use this fact to "normalise" independently the originating and terminating leg of the call. The embodiment also controls routing from a CS network through the Media Server (MSS) / Media Gateway (MGW) 20 to an IMS network. The MSS / MGW 20 acts as a frontier between IMS and legacy CS networks, providing routing capabilities and some intelligence based usually on the originating and terminating parties.

In this document, we will say that there is a breakout when the call is sent from IMS to CS, and there is a break-in when the call goes from CS to IMS.

The routing of the call is controlled by a special "Intelligent Breakout" AS (IBAS) 80. The IBAS 80 operates and is accessed generally in the same way as a conventional AS (as described above). The routing of the call to the IBAS 80 is determined by the iFC of the user (as described above). The fact that the IBAS 80 is an AS simplifies operation with any other IMS compatible product, as the only modification needed is in the IMS profile of the user, to introduce the IBAS 80 invocation.

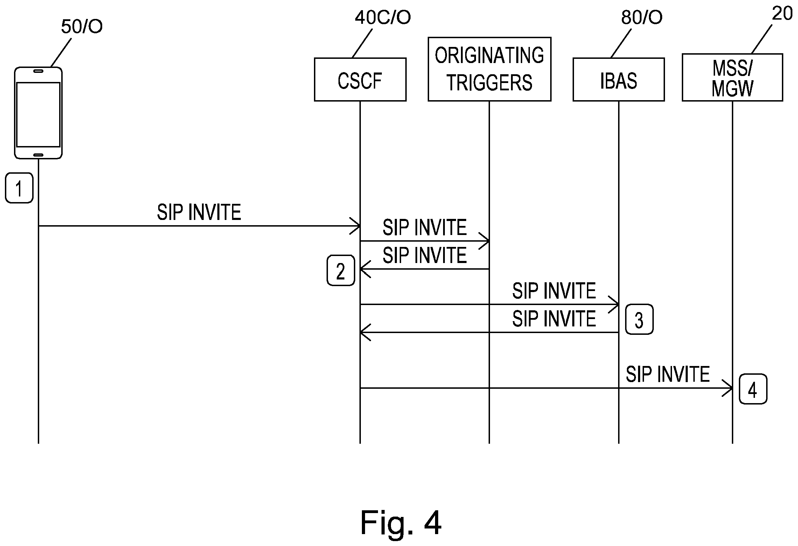

The procedure for performing a break out in the originating leg of a call will be described with reference to Figure 4.

At 1.- The IMS client of the originating UE 50/O starts the transaction with a SIP request, an INVITE for example.

At 2.- The call progresses normally. The call session control function (CSCF) 40C/O will execute the triggers on the UE 50/O subscriber's profile (iFCs) - which includes a trigger to the IBAS 80.

At 3.- At a certain point of the AS chaining, a trigger to the IBAS 80 is executed. IBAS 80 will decide: (i) if the call is to be routed to the MGW 20 for breakout, based on certain factors, and (ii) how the routing is performed. If the call is routed to the MGW 20 it will breakout from the IMS network to the CS network.

At 4.- The call is optionally routed to the MGW 20.

With regard to (i), in its simplest form the IBAS 80 may act as a simple ON/OFF switch and so route all calls to the MGW 20 or route no calls to the MGW 20. Advantageously the IBAS selectively routes calls to the MGW 20 to prevent unnecessary breakouts. Selective routing by the IBAS 80 to the MGW 20 may be performed based one or more of:
- The call parameter on the SIP INVITE message. The call parameter is a regular parameter in the route header, and normally indicates a service - for example: "call=IBAS". Other headers can be used. This can be analysed to determine whether the call has already been processed by a MSS/MGW 20 before.
- Analysis of the caller ("A") and callee ("B") subscribers, e.g. by matching the information with another data repository: normally this is done via CUR (Common User Repository) with information about the user subscription, or a device vs user database, location, coverage, etc. This analysis determines whether the call has already been processed by a MSS/MGW 20 before.
- The contact and Via headers may be analysed to determine the path that the call has followed (and therefore whether the call has already been processed by a MSS/MGW 20 before).
- A proprietary header to be introduced by the MSS/MGW 20, or a prefix used on the A party. This can be analysed to determine whether the call has already been processed by a MSS/MGW 20 before.

As is known to those skilled in the art, the contact header field provides a single SIP URI that can be used to contact the sender of the INVITE for subsequent requests. The Contact header field contains exactly one SIP URI in any request that can result in the establishment of a dialog - in this case, specifically a SIP INVITE. For these requests, the scope of the contact is global. That is, the contact header field value contains the URI at which the sender is expecting to receive requests.

As is known to those skilled in the art, the Via header shows the transport protocol used and the request route. Every proxy in the request path adds to the top of the "Via" the address and port on which it received the message, than forwards it onwards. When processing responses, each proxy in the return path processes the contents of the "Via" field in reverse order, removing its address from the top.

If it is determined that the call has been processed by the MSS/MGW 20 before, then the IBAS 80 selects either that a breakout will not be performed or that breakout "with inhibition" is performed (described below).

If it is determined that the call has been not processed by the MSS/MGW 20 before, the process continues and a breakout method is selected.

With regard to (ii), by way of example, the following three different ways of performing the breakout may be implemented:
a- Breakout with inhibition: terminating services will not be executed, after the originating services are completed. The terminating services of the called ("B") party will not be completed. In this example, originating services are provided by the ASs 60A-60C/O in the originating leg of the call. The call is then routed to the MGW 20 as a result of the IBAS 80 action and enters the CS network to terminate the call. The CS terminating service of performing a transfer (break-in) by the CS network of the call back to the IMS network is inhibited (not performed). We are preventing a subsequent break-in to IMS with the prefix, unlike the next method. A prefix is added to the call to indicate that breakout with inhibition is to be performed, and this prefix is interpreted by elements of the network to implement the breakout with inhibition appropriately.
b- Breakout without inhibition: terminating services may be executed, after the originating services are completed. In this example, originating services are provided by the ASs 60A-60C/O in the originating leg of the call. The call is then routed to the MGW 20 as a result of the IBAS 80 action and enters the CS network to terminate the call. The CS terminating service of performing a transfer (break-in) by the CS network of the call back to the IMS network is not inhibited. The call may break-in to IMS in dependence on the services required by the callee. The break-in may be performed at, and controlled by, the IBAS 80. The services of the B party are analysed independently. Whether the call breaks in again depends on the services of this particular user. A prefix is added to the call to indicate that breakout without inhibition is to be performed, and this prefix is interpreted by elements of the network to implement the breakout without inhibition appropriately.
c- Route header: terminating services may be executed, disrupting the originating services. The route header is a standard header in SIP. It marks the next hop (or hops) in the signalling. The route header is executed the moment it is reaches the topmost position in the sequence of hops. According to this example, the route header may be modified to cause the CS terminating service of performing a transfer (break-in) by the CS network of the call back to the IMS network. The call may break-in to IMS in dependence on the services required by the callee. The break-in may be performed at, and controlled by, the IBAS 80. This method differs from the prefix examples a and b above in that the prefix action is executed when the terminating services execution starts, whereas the route header is executed the moment it is introduced in the topmost position - and so breakout may occur before the originating services are provided.

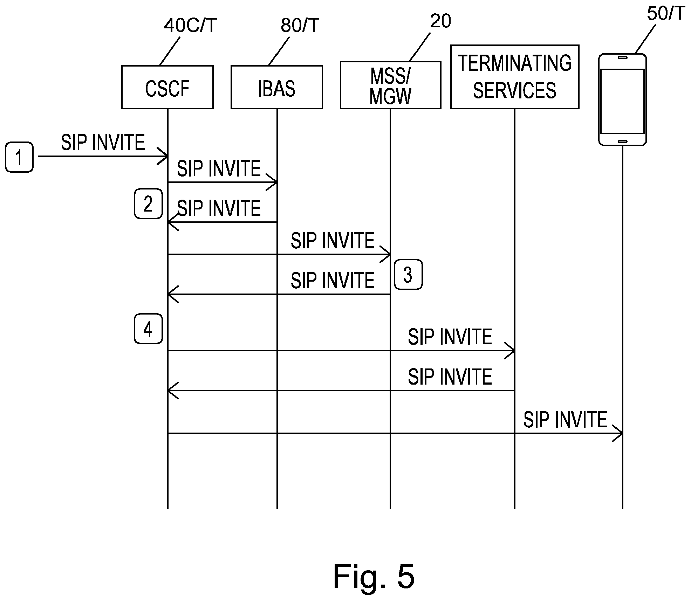

The procedure for performing a break out in the terminating leg of a call will be described with reference to Figure 5.

At 1.- The terminating leg of the call, coming from the IMS/MGW 20, starts with the arrival of a request to the terminating CSCF 40C/T, an INVITE for example.

At 2.- The call progresses normally. The terminating CSCF 40C/T executes the triggers on the callee subscriber profile. In this example, the IBAS 80 triggers are executed before the other services, but it is a decision to be taken depending on the implementation. The IBAS 80 decides if the call is to be routed to the MGW 20 (i.e. whether a break out is performed) based on similar parameters to the ones described on the originating scenario above in (i). That is, if it is determined that the call has been processed by the MSS/MGW 20 before, then the IBAS 80 then selects either that a breakout will not be performed or that breakout "with inhibition" is performed, or, if it is determined that the call has been not processed by the MSS/MGW 20 before, the process continues and a breakout method is selected.

At 3.- Three different ways of performing the breakout are as follows:
a- Breakout with inhibition: the call will be routed to CS, and the terminating services will not be evaluated again. In this example, the call is routed to the MGW 20 as a result of the IBAS 80/T action and enters the CS network to terminate the call. The CS terminating service of performing a transfer (break-in) by the CS network of the call back to the IMS network is inhibited (not performed). A prefix is added to the call to indicate that breakout with inhibition is to be performed, and this prefix is interpreted by elements of the network to implement the breakout appropriately.
b- Breakout without inhibition / route header: terminating services may be evaluated again. In this example, the call is routed to the MGW 20 as a result of the IBAS 80/T action and enters the CS network to terminate the call. The CS terminating service of performing a transfer (break-in) by the CS network of the call back to the IMS network is not inhibited. The call may break-in to IMS in dependence on the services required by the callee. The break-in may be performed at, and controlled by, the IBAS 80. The call may be eventually sent back to IMS and may be routed to the in the IBAS 80T again by virtue of the IMS profile of the callee. According to an advantageous feature of the embodiment, careful loop detection and prevention is implemented in IBAS 80T if this method is in use - as conventionally the MSS/MGW 20 does not respect the Max-Forwards header on the SIP message (the Max-Forwards header is intended to limit the number of proxies or gateways that can forward a request). A prefix may be added to the call to indicate that breakout without inhibition is to be performed, and this prefix is interpreted by elements of the network to implement the breakout appropriately.
   The following methods may be used to perform the loop detection:
   - Concurrency of calls: a register is maintained for the calls that are managed by IBAS 80T, so, before any other breakout is done, the register may be queried to know if there is a loop. After the call is first broken out, the register is changed from a first value to a second value. The IBAS 80T checks the register before processing the call. If the register has the second value, a break out will not be performed or breakout with inhibition is performed.
   - Header check: the SIP request normally includes information that can be interpreted to determine that it has previously passed through a MSS/MGW 20. An example implementation is for the IBAS 80T to look to the Via, the contact header or the connection information from the SDP if present. The IBAS 80T checks the header before processing the call. If the header indicates that the call has previously passed through a MSS/MGW 20, a break out will not be performed or breakout with inhibition is performed.
   - Proprietary header: the MSS / MGW 20 can be configured to introduce a proprietary SIP header, P or X, to prevent the IBA 80T from breaking out the call. When the call is first processed by a MSS/MGW 20 the header is changed from a first value to a second value. The MSS/MGW 20 checks the header before processing the call. If the header has the second value, a break out will not be performed or breakout with inhibition is performed.
   A mix of the above methods may advantageously be performed.
c- Direct communication with the MSS / MGW 20: The IBAS 80 communicates directly with the MSS/MGW 20 to route the call thereto in order to perform breakout to CS. The communication with the MSS / MGW 20 is not done through the CSCF 40C/T but directly from IBAS 80/T. This method does not disrupt the terminating chain of triggers, and even the IBAS can work in proxy mode, removing itself from further request and answer on the same dialog if desired.

An algorithm causes processing of the incoming INVITE and storing of the relevant data, such as route and Original Dialog Identifier (ODI), causes the communication with the MSS/MGW 20, and, once it is done, and incorporates the connection information in the SDP of the outgoing INVITE, incorporating the ODI and route previously stored, so the trigger evaluation can continue normally to the terminating party.
4.- Another important point is how the call is broken-in to IMS again (in case it is needed). There are also several ways to do that, and they will be tightly tied with the points in 3. above.
- Rely on the current configuration of the user: normally, and IMS subscriber will have some mechanism to break-in again in IMS. Conventionally, the problem is that the trigger evaluation is done without any knowledge that the call has previously been broken out, and so a loop could occur. According to the embodiment, IBAS 80 detects a previous breakout and avoids subsequent breakouts without inhibition and so prevents loops (these methods are described above).
- Ad-hoc configuration of the breakout prefix: rely on the analysis of the called B number when a prefix is added or a custom configuration on the MSS/MGW (for example to allow the break-in based on a header or SIP route).
   - Continue the analysis: The break-in will be directed directly to IBAS 80, which will include the ODI previously stored, on the route header to be able to continue the trigger evaluation on the CSCF without disruption. The ODI is used by the CSCF to know the point where the execution of the profile is left. So, if there has been a breakout with service disruption, we can identify the case where the call has broken-in again in the IMS and choose to let the service execution continue at the point it was disrupted before. A prefix may be added to a communication to indicate the use of this option.
   - Start the analysis: The break in will be directed to IBAS 80, but the call will progress without the ODI. That means that the call will be treated as a new call for the CSCF, and will start the trigger evaluation. A prefix may be added to a communication to indicate the use of this option.

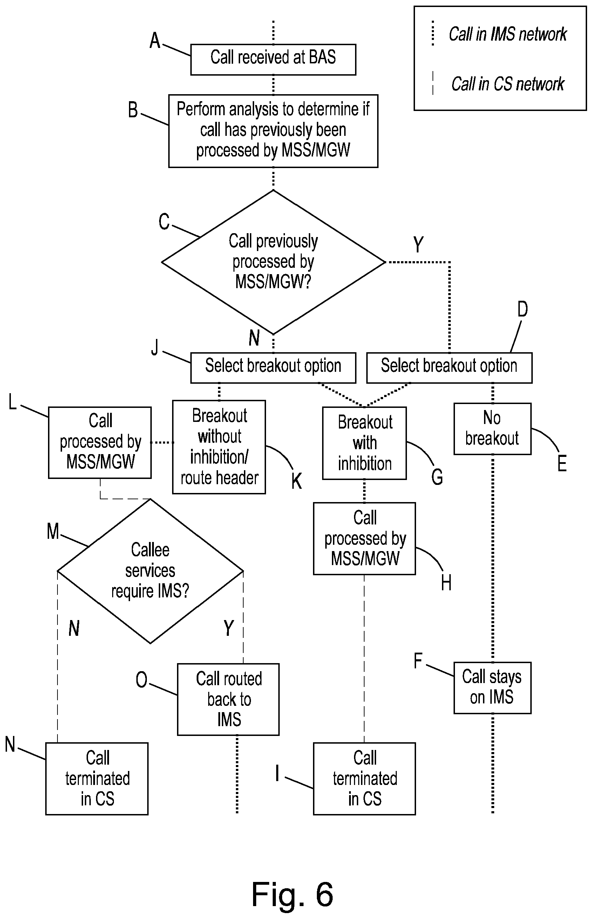

The procedures performed in the terminating leg of a call described above will now be described with reference to the flow chart of Figure 6.

At **step A** the call is received at the IBAS 80 in the terminating leg - due to triggering based on the iFC, as discussed above.

At **step B** analysis is performed to determine if the call has previously been processed by the MSS/MGW 20 in the terminating leg. This may be done by analysing the parameters or headers as described above.

In dependence upon the analysis performed at step B, at **step C,** a first set of breakout options or a second set of breakout options are made available. If, at step C, it is determined the call has previously been processed by the MSS/MGW 20, then the first set of breakout options are made available (at **step D**). From these options an appropriate breakout method is selected. The method may either be no breakout or breakout "with inhibition".

If no breakout is selected at **step E,** then, at **step F,** the call stays on the IMS network.

On the other hand, if, at **step G,** breakout with inhibition is selected, the call is then processed by the MSS/MGW 20 at **step H** and enters the CS network. The call is terminated in the CS network at **step I.**

If at step C it is determined that the call has not previously been processed by the MSS/MGW 20, then the breakout options at **step J** are made available. The available breakout options are breakout "with inhibition" or breakout "without inhibition"/"route header".

If breakout with inhibition is selected steps G, H and I are performed as described above, and the call is terminated in the CS network.

On the other hand, if breakout without inhibition/route header is selected at **step K,** the call is processed by the MSS/MGW 20 at **step L** and enters the CS network.

At **step M** it is determined if the services required by the callee are such that the call should break-in to the IMS network.

If it is determined, at step M, that break-in to the IMS network is not required, the call is terminated in the CS network at **step N.**

On the other hand, if it is determined at step M, that break-in to the IMS network is required to perform the callee services, then, at step O, the call is routed back to the IMS network by the IBAS 80 in the terminating leg and the call breaks-in to the IMS network.

If the call breaks-in to the IMS network at **step O,** there would, conventionally, be the potential for an undesirable loop situation to occur as the call, after break-in, could be received at the IBAS 80 in the terminating leg again, and so a further breakout and break-in could occur, creating a cycle of breakout and break-in. However, by virtue of the analysis performed at step B, and the selection of the breakout options at steps C, D and J, in accordance with the present embodiment, that the call has been previously processed by the MSS/MGW 20 in the terminating leg will be detected and so the breakout options available for selection at step D will be no breakout (step E) or breakout with inhibition (at step G). Thus, after a break-in has been performed, such a call will either remain on the IMS or will be terminated in the CS network after a break out with inhibition at step G. The performance of a second break-in (and therefore an undesirable cycle or loop) is prevented.

Although the prevention of a break-in from CS to IMS has been described to prevent an undesirable loop, break-in may be prevented for other reasons such as when it is specifically desired to terminate a call in the CS network.

## Claims

1. A method of controlling the routing of a voice call between a first entity and a second entity in a telecommunications system including a circuit switched network and an Internet Protocol Multimedia Subsystem, IMS, network, the method **characterised by** including:
directing the call to a processing node (80);
at the processing node (80), analysing routing information associated with the call;
sending the call via the circuit switched network and/or the IMS network in dependence upon the analysis;
the processing node determining whether the call has been processed by a Media Gateway/Mobile Switching Centre Server, MSS/MGW (20) of the circuit switched network, before; and
if the call has been processed by the MSS/MGW before, the processing node either (i) routing the call to the IMS network or (ii) routing the call to the circuit switched network and preventing subsequent routing of the call from the circuit switched network to the IMS network.

2. The method of claim 1, wherein the routing information includes call parameters of a SIP INVITE.

3. The method of claim 2, wherein the call parameters include header fields such as a Contact field or a Via field.

4. The method of claim 1, wherein the routing information relates to an analysis of information relating to the first entity and/or the second entity.

5. The method of any one of the preceding claims, wherein the first and/or second entity has a profile associated therewith which indicates to which of a plurality of application servers of the telecommunications network the call is routed.

6. The method of claim 5, wherein the processing node comprises one of the application servers.

7. The method of claim 6, including modifying the profile of the first and/or second entity to cause the call to be routed to the processing node.

8. The method of any one of the preceding claims, wherein the telecommunications system provides Voice over LTE, VoLTE, services.

9. A processing node (80) for controlling the routing of a voice call between a first entity and a second entity in a telecommunications system including a circuit switched network and an Internet Protocol Multimedia Subsystem, IMS, network, and in which the call is directed to the processing node (80), the processing node including:
analysing means operable to analyse routing information associated with the call;
routing means operable to send the call via the circuit switched network and/or the IMS network in dependence upon the analysis;
wherein the analysing means is operable to determine whether the call has been processed by a Media Gateway/Mobile Switching Centre Server, MSS/MGW (20), of the circuit switched network before; and
wherein the routing means is operable, if the call has been processed by the MSS/MGW before, to either (i) route the call to the IMS network or (ii) route the call to the circuit switched network and prevent subsequent routing of the call from the circuit switched network to the IMS network.

10. The processing node of claim 9, including means operable to implement the method of any one of claims 1 to 8.

## Patentansprüche

1. Ein Verfahren zur Steuerung des Routings eines Sprachanrufes zwischen einer ersten Einheit und einer zweiten Einheit in einem Telekommunikationssystem, das ein leitungsvermitteltes Netz und ein Internetprotokoll-Multimedia-Subsystem-Netz (Internet Protocol Multimedia Subsystem, IMS-Netz) beinhaltet, wobei das Verfahren **dadurch gekennzeichnet ist, dass** es Folgendes beinhaltet:
Weiterleiten des Anrufes an einen Verarbeitungsknoten (80);
Analysieren, an dem Verarbeitungsknoten (80), von dem Anruf zugeordneten Routinginformationen;
Senden des Anrufes über das leitungsvermittelte Netz und/oder das IMS-Netz in Abhängigkeit von der Analyse;
Bestimmen, durch den Verarbeitungsknoten, ob der Anruf zuvor von einem Media-Gateway/Mobilvermittlungsstellenserver (Media Gateway/Mobile Switching Centre Server, MSS/MGW) (20) des leitungsvermittelten Netzes verarbeitet wurde; und
wenn der Anruf zuvor von dem MSS/MGW verarbeitet wurde, entweder, durch den Verarbeitungsknoten, (i) Routen des Anrufes an das IMS-Netz oder (ii) Routen des Anrufes an das leitungsvermittelte Netz und Verhindern von nachfolgendem Routing des Anrufes von dem leitungsvermittelten Netz an das IMS-Netz.

2. Das Verfahren nach Anspruch 1, wobei die Routinginformationen Anrufparameter eines SIP INVITE beinhalten.

3. Das Verfahren nach Anspruch 2, wobei die Anrufparameter Header-Felder wie ein "Contact"-Feld oder ein "Via"-Feld beinhalten.

4. Das Verfahren nach Anspruch 1, wobei sich die Routinginformationen auf eine Analyse von Informationen im Zusammenhang mit der ersten Einheit und/oder der zweiten Einheit beziehen.

5. Das Verfahren nach einem vorhergehenden Anspruch, wobei der ersten und/oder der zweiten Einheit ein Profil zugeordnet ist, das angibt, an welchen aus einer Vielzahl von Anwendungsservern des Telekommunikationsnetzes der Anruf geroutet wird.

6. Das Verfahren nach Anspruch 5, wobei der Verarbeitungsknoten einen der Anwendungsserver umfasst.

7. Das Verfahren nach Anspruch 6, beinhaltend das Ändern des Profils der ersten und/oder zweiten Einheit, um zu veranlassen, dass der Anruf an den Verarbeitungsknoten geroutet wird.

8. Das Verfahren nach einem vorhergehenden Anspruch, wobei das Telekommunikationssystem Sprache-über-LTE-Dienste (Voice over LTE, VoLTE-Dienste) bereitstellt.

9. Ein Verarbeitungsknoten (80) zur Steuerung des Routings eines Sprachanrufes zwischen einer ersten Einheit und einer zweiten Einheit in einem Telekommunikationssystem, das ein leitungsvermitteltes Netz und ein Internetprotokoll-Multimedia-Subsystem-Netz (Internet Protocol Multimedia Subsystem, IMS-Netz) beinhaltet und in dem der Anruf an den Verarbeitungsknoten (80) weitergeleitet wird, wobei der Verarbeitungsknoten Folgendes beinhaltet:
Analysemittel, so betreibbar, dass dem Anruf zugeordnete Routinginformationen analysiert werden;
Routingmittel, so betreibbar, dass der Anruf in Abhängigkeit von der Analyse über das leitungsvermittelte Netz und/oder das IMS-Netz gesendet wird;
wobei die Analysemittel so betreibbar sind, dass sie bestimmen, ob der Anruf zuvor von einem Media-Gateway/Mobilvermittlungsstellenserver (Media Gateway/Mobile Switching Centre Server, MSS/MGW) (20) des leitungsvermittelten Netzes verarbeitet wurde; und
wobei die Routingmittel so betreibbar sind, dass sie, wenn der Anruf zuvor von dem MSS/MGW verarbeitet wurde, entweder (i) den Anruf an das IMS-Netz routen oder (ii) den Anruf an das leitungsvermittelte Netz routen und ein nachfolgendes Routing des Anrufes von dem leitungsvermittelten Netz an das IMS-Netz verhindern.

10. Der Verarbeitungsknoten nach Anspruch 9, beinhaltend Mittel, die so betreibbar sind, dass sie das Verfahren nach einem der Ansprüche 1 bis 8 umsetzen.

## Revendications

1. Un procédé de commande de l'acheminement d'un appel vocal entre une première entité et une deuxième entité dans un système de télécommunications comprenant un réseau à commutation de circuits et un réseau de sous-système multimédia protocole Internet, IMS, le procédé étant **caractérisé en ce qu'**il comprend :
la direction de l'appel vers un nœud de traitement (80),
au niveau du nœud de traitement (80), l'analyse d'informations d'acheminement associées à l'appel,
l'envoi de l'appel par l'intermédiaire du réseau à commutation de circuits et/ou du réseau IMS en fonction de l'analyse,
la détermination par le nœud de traitement si l'appel a été traité par une passerelle multimédia/serveur de centre de commutation mobile, MSS/MGW (20) du réseau à commutation de circuits auparavant, et
si l'appel a été traité par la MSS/MGW auparavant, le nœud de traitement soit (i) achemine l'appel vers le réseau IMS ou (ii) achemine l'appel vers le réseau à commutation de circuits et empêche un acheminement subséquent de l'appel du réseau à commutation de circuits vers le réseau IMS.

2. Le procédé selon la Revendication 1, où les informations d'acheminement comprennent des paramètres d'appel d'un SIP INVITE.

3. Le procédé selon la Revendication 2, où les paramètres d'appel comprennent des champs d'entête tels qu'un champ Contact ou un champ Via.

4. Le procédé selon la Revendication 1, où les informations d'acheminement portent sur une analyse d'informations relatives à la première entité et/ou la deuxième entité.

5. Le procédé selon l'une quelconque des Revendications précédentes, où la première et/ou la deuxième entité possède un profil associé à celle-ci qui indique vers quel serveur d'une pluralité de serveurs d'applications du réseau de télécommunications l'appel est acheminé.

6. Le procédé selon la Revendication 5, où le nœud de traitement comprend un des serveurs d'applications.

7. Le procédé selon la Revendication 6, comprenant la modification du profil de la première et/ou de la deuxième entité de façon à amener l'appel à être acheminé vers le nœud de traitement.

8. Le procédé selon l'une quelconque des Revendications précédentes, où le système de télécommunications fournit des services Voix sur LTE, VoLTE.

9. Un nœud de traitement (80) destiné à la commande de l'acheminement d'un appel vocal entre une première entité et une deuxième entité dans un système de télécommunications comprenant un réseau à commutation de circuits et un réseau de sous-système multimédia protocole Internet, IMS, et dans lequel l'appel est dirigé vers le nœud de traitement (80), le nœud de traitement comprenant :
un moyen d'analyse conçu de façon à analyser des informations d'acheminement associées à l'appel,
un moyen d'acheminement conçu de façon à envoyer l'appel par l'intermédiaire du réseau à commutation de circuits et/ou du réseau IMS en fonction de l'analyse,
où le moyen d'analyse est conçu de façon à déterminer si l'appel a été traité par une passerelle multimédia/serveur de centre de commutation mobile, MSS/MGW (20), du réseau à commutation de circuits auparavant, et
où le moyen d'acheminement est conçu, si l'appel a été traité par la MSS/MGW auparavant, de façon à soit (i) acheminer l'appel vers le réseau IMS ou (ii) acheminer l'appel au réseau à commutation de circuits et empêcher un acheminement subséquent de l'appel du réseau à commutation de circuits vers le réseau IMS.

10. Le nœud de traitement selon la Revendication 9, comprenant un moyen conçu de façon à mettre en œuvre le procédé selon l'une quelconque des Revendications 1 à 8.
